Europäisches Patentamt

(19) European Patent Office · (11) Numéro de publication: **0 022 043**
**B1**
Office européen des brevets

(12) # FASCICULE DE BREVET EUROPEEN

(45) Date de publication du fascicule du brevet: 23.03.83

(21) Numéro de dépôt: 80420071.5

(22) Date de dépôt: 17.06.80

(51) Int. Cl.³: **B 65 D 1/48**, B 65 D 6/34

(54) Procédé de renforcement d'objets en matière plastique au moyen d'armatures internes et caisse de manutention renforcée par mise en oeuvre de ce procédé.

(30) Priorité: 29.06.79 FR 7917420

(43) Date de publication de la demande:
07.01.81 Bulletin 81/1

(45) Mention de la délivrance du brevet:
23.03.83 Bulletin 83/12

(84) Etats contractants désignés:
AT BE CH DE GB IT LI NL SE

(56) Documents cités:
FR-A-1 342 511
FR-A-1 502 217
FR-A-2 419 223

(73) Titulaire: ALLIBERT EXPLOITATION Société anonyme dite:, 129, avenue Léon Blum, F-38100 Grenoble, Isère (FR)

(72) Inventeur: Triadu, Alain, 26, rue de Villiers, F-92300 Levallois Perret (FR)

(74) Mandataire: Maureau, Bernard, Cabinet GERMAIN & MAUREAU Le Britannia - Tour C 20, Boulevard Eugène Déruelle, F-69003 Lyon (FR)

Procédé de renforcement d'objets en matière plastique au moyen d'armatures internes et
caisse de manutention renforcée par mise en oeuvre de ce procédé

L'invention a pour objet un procédé de renforcement d'objets en matière plastique au moyen d'armatures internes.

Dans certaines applications, les matières plastiques usuelles ont une rigidité insuffisante, ce qui amène à renforcer les objets moulés dans ces matières au moyen d'armatures internes. Tel est le cas notamment lorsqu'il s'agit d'objets en matière plastique qui ont des dimensions relativement importantes et doivent pouvoir résister à des efforts donnant lieu à des compressions et à des flexions; et c'est ainsi par exemple le cas des caisses et des palettes moulées en matière plastique.

Il est certes possible d'utiliser certaines matières plastiques qui permettent de mouler des objets présentant une bonne rigidité et résistant donc suffisamment aux efforts de flexion et de compression; mais les matières plastiques alors employées présentent l'inconvénient d'avoir une mauvaise résistance aux chocs. Or, dans de nombreux cas, particulièrement celui des caisses et des palettes, il est nécessaire de disposer de bonnes qualités, à la fois en rigidité et en résistance aux chocs.

Il n'existe malheureusement pas de matière plastique économique répondant à ces deux conditions, ce qui amème finalement à mouler l'objet en une matière plastique ayant une bonne résistance aux chocs, par exemple en polyéthylène, mais à prévoir à l'intérieur du corps ou des parois de l'objet des armatures lui donnant la rigidité recherchée, ces armatures étant constituées en un matériau rigide tel que le bois ou le métal. Le brevet français 1 502 217 illustre ce processus dans le cas d'une caisse de manutention.

La mise en place de l'armature rigide dans de tels objets moulés en matière plastique pose cependant un problème. Il existe certes une solution simple consistant à enrober l'armature par surmoulage sur elle de la matière plastique destinée à constituer l'objet proprement dit, par exemple caisse, palette ou autre. Ce surmoulage n'est pas difficile en soi, mais il nécessite un choix délicat de la matière surmoulée, car beaucoup de matières plastiques ne supportent pas sans fissuration le blocage que l'armature intérieure oppose à leur retrait lors de la solidification et du refroidissement de la matière moulée.

L'invention apporte une solution à ce problème, en proposant un procédé permettant de lier l'armature après moulage de la pièce principale, par mise en oeuvre d'un moyen grâce auquel sont évitées les fissurations de la matière moulée.

La partie de la pièce en matière plastique à renforcer présentant une double paroi délimitant un canal qui sert au logement d'une armature en un matériau rigide, et est fermé par un capot en matière plastique, ce procédé consiste à prévoir au moins une ligne d'orifices sur chacun des deux éléments constitutifs de la double paroi, à prévoir dans la pièce de renforcement servant d'armature des gorges situées en regard des lignes d'orifices précitées, et à surmouler le capot de fermeture de façon telle que la matière plastique le constituant réalise la liaison entre la double paroi de l'objet et son armateur, en passant au travers des orifices de la première et en s'étendant dans les gorges de laseconde.

L'invention sera bien comprise d'ailleurs, et ses avantages ainsi que d'autres caractéristiques ressortiront de la description qui suit, en référence au dessin schématique annexé représentant, à titre d'exemple non limitatif, une forme d'exécution d'un objet en matière plastique moulée dont le renforcement est obtenu par mise en oeuvre de ce procédé:

Figure 1 est une vue en perspective d'une caisse en matière plastique dont le bord supérieur est renforcé selon ce procédé;

Figure 2 est, à plus grande échelle, une vue partielle en coupe verticale du bord supérieur renforcé de cette caisse;

Figures 3 et 4 sont des vues, respectivement en perspective éclatée et en coupe verticale, qui illustrent une pièce en matière plastique renforcée selon ce procédé.

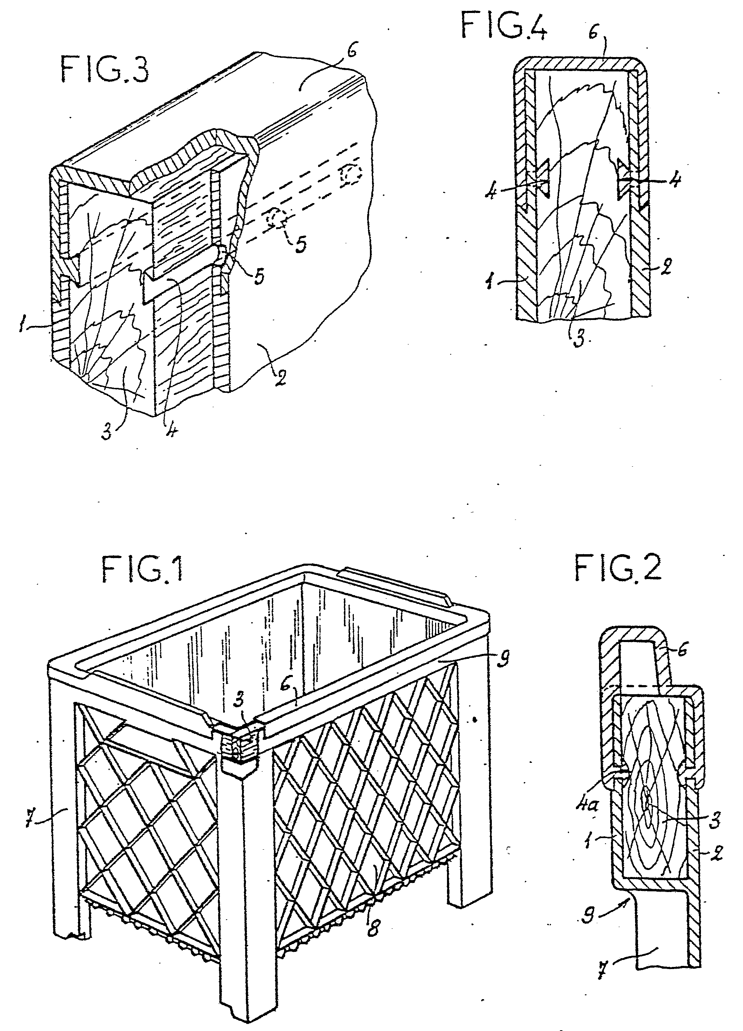

En référence aux figures 3 et 4, (1) et (2) désignent deux parois en matière plastique qui sont parallèles et viennent de moulage avec le corps d'un objet qui peut être, par exemple, une caisse ou une palette de manutention; dans ce cas, les deux parois (1) et (2) constituent à elles deux la paroi périphérique de l'objet et elles délimitent un canal que est ouvert vers le haut.

Lorsque l'objet a été moulé, son renforcement est obtenu par introduction d'une armature en bois (3) dans le canal délimité par les deux parois (1) et (2), cette armateur ayant à l'intérieur de la double paroi de l'objet moulé une hauteur fonction des caractéristiques mécaniques recherchées pour cet objet. Il est en tout cas important de noter que l'armateur (3) présente sur ses deux faces latérales longitudinales deux gorges (4) et que les deux parois (1) et (2) comportent, venant de moulage, des orifices (5) qui sont situés suivant deux lignes rectilignes parallèles au bord supérieur desdites parois.

L'armateure (3) est dimensionnée et positionée dans le canal délimité par les deux parois (1) et (2) de façon telle que ses deux gorges latérales (4) se trouvent en regard des orifices (5) prévus dans les parois (1) et (2).

Ce sont précisément ces deux gorges (4) et ces orifices (5) qui permettent ultérieurement la liaison entre l'armature (3) et l'objet moulé. Cette liaison est réalisée par une pièce en matière plastique, qui est surmoulée sur l'ensemble formé par les deux parois (1) et (2) et par l'armature (3). Cette pièce, désignée par (6) aux figures 3 et 4, présente une forme générale de U renversé et constitue un capot qui recouvre, à la fois la face supérieure de l'armature (3) et la partie supérieure des faces externes des parois (1) et (2); et l'important est de constater que, lors de son surmoulage, la matière plastique constitutive de cette pièce (6) passe au travers des orifices (5) des parois (1) et (2), et s'étend dans les canaux (4) de l'armature (3). Elle réalise ainsi une liaison entre cette armature et les parois (1) et (2) de l'objet moulé.

Il est évident que la pièce surmoulée (6) doit être réalisée en une matière plastique présentant la particularité d'être résistante aux chocs et de ne pas se fissurer lors de sa solidification et des retraits qui en résultent. C'est donc ainsi notamment qu'il est avantageux de recourir à une matière plastique telle qu'un polypropylène, matière de coût modéré, offrant beaucoup des avantages des polyéthylènes haute densité avec en plus une bonne résistance à la fissuration, bien qu'usuellement une moindre résistance aux chocs. Bien entendu, le procédé demeure applicable si la caisse elle-même est moulée aussi en polypropylène.

Les figures 1 et 2 montrent l'application de ce procédé de renforcement à une caisse en matière plastique dans laquelle les montants verticaux sont désignés par (7), les parois latérales par (8) et le bord supérieur ou ceinture par (9); c'est précisément ce bord supérieur ou ceinture que est constitué par la double paroi (1—2) des figures 3 et 4 et que, après mise en place de l'armature en bois (3), est recouverte par le capot surmoulé (6).

La figure 2 représente d'ailleurs plus en détail l'agencement du bord supérieur de la caisse et montre que le profil du capot (6) peut être différent de celui visible aux figures 3 et 4; la figure 2 montre aussi que les gorges latérales (4a) de cette armature (3) peuvent avoir un profil autre que celui des gorges (4) montré à la figure 3. L'essentiel est de constater que dans tous les cas la liaison entre l'armature (3) et la double paroi aménagée dans le bord supérieur (9) de la caisse est réalisée par la pièce surmoulée (6) qui passe au travers des orifices prévus dans la double paroi (9) et garnit les rainures (4a) de l'armature (3).

Comme il va de soi, l'invention ne se limite pas à ces seules formes d'exécution qui ont été ci-dessus décrites à titre d'exemples; elle en embrasse au contraire toutes les variantes de réalisation, et elle étend bien entendu son champ d'application non seulement aux caisses, palettes et similaires, mais à tous autres objets en matière plastique moulée nécessitant un renforcement par des armatures internes, dans le cadre défini par les revendications.

## Revendications

1. Procédé de renforcement, au moyen d'une armature interne en un matériau rigide (3), d'un objet en matière plastique comportant au moins une double paroi (1—2) délimitant un canal qui sert au logement de cette armature (3) et est fermé par un capot en matière plastique (6), caractérisé en ce qu'il consiste à prévoir au moins une ligne d'orifices (5) sur chacun des deux éléments constitutifs de la double paroi, à prévoir dans la pièce de renforcement (3) servant d'armature des gorges (4) situées en regard des lignes d'orifices précitées, et à surmouler le capot de fermeture (6) de façon telle que la matière plastique le constituant réalise la liaison entre la double paroi de l'objet et son armature en passant au travers des orifices de la première et en s'étendant dans les gorges de la seconde.

2. Caisse de manutention renforcée par la mise en oeuvre du procédé selon la revendication 1, comportant des piliers (7) réunis deux à deux par une double paroi (1—2), caractérisée en ce que cette double paroi (1—2) présente deux lignes d'orifices (5) qui sont en regard les unes des autres et débouchent dans les gorges (4) aménagées dans les deux faces latérales longitudinales de la pièce de renforcement (3), l'ensemble double paroi et pièce de renforcement étant recouvert par le capot surmoulé (6) dont les joues sont liées à la pièce de renforcement et à la double paroi par la matière plastique passant au travers des orifices (5) de cette double paroi et remplissant les gorges (4) de cette pièce de renforcement.

## Patentansprüche

1. Verfahren zum Verstärken eines Gegenstandes aus Kunststoff mittels einer internen Armierung (3) aus starrem Material, wobei der Gegenstand wenigstens eine Doppelwandung (1—2) besitzt, die einen Kanal zur Aufnahme der Armierung (3) begrenzt und von einer Abdekkung (6) aus Kunststoff verschlossen ist, dadurch gekennzeichnet,

— daß auf jedem der die Doppelwandung bildenden Elemente wenigstens eine Reihe von Öffnungen (5) vorgesehen wird,
— daß in dem als Armierung dienenden Verstärkungsteil (3) den genannten Öffnungen gegenüber liegende Nuten (4) vorgesehen werden
— und daß die als Verschluß dienende Abdeckung (6) derart übergeformt wird, daß der sie bildende Kunststoff die Verbindung zwischen der Doppelwandung des Gegenstandes und seiner Armierung herstellt, indem er durch die Öffnungen der ersteren hindurchdringt und sich in den Nuten der letzteren ausbreitet.

2. Nach dem Verfahren nach Anspruch 1 hergestellter armierter Lagerkasten mit Pfosten (7), die paarweise durch eine Doppelwandung (1—2) miteinander verbunden sind, dadurch gekennzeichnet,

— daß diese Doppelwandung (1—2) zwei Reihen von Öffnungen (5) aufweist, die einander gegenüberliegen und in den Nuten (4) münden, die in den beiden Längsseiten des Verstärkungsteils (3) angebracht sind,

— daß die aus Doppelwandung und Verstärkungsteil bestehende Gesamtheit von der darüber geformten Abdeckung (6) verschlossen ist

— und daß die Wangen der Abdeckung mit dem Verstärkungsteil und der Doppelwandung durch den Kunststoff verbunden sind, der durch die Öffnungen (5) der Doppelwandung hindurchtritt und die Nuten (4) des Verstärkungsteils ausfüllt.

**Claims**

1. Method for reinforcing, by means of an internal frame member (3) of a rigid material, a plastics article comprising at least one double wall (1—2) defining a channel which acts as a housing for this frame member (3), and is closed by a capping (6) of plastics material, characterised in that the process consists in providing at least one line of orifices (5) on each of the two elements comprising the double wall, in providing in the reinforcement member (3) which serves as the frame member grooves (4) arranged facing the said lines of orifices, and in moulding on the capping (6) in such a manner that the plastics material of which it is comprised forms the bond between the double wall of the article and the frame member, by passing through the orifices in the former and extending into the grooves in the latter.

2. Handling crate reinforced by the method according to Claim 1, comprising pillars (7) joined in pairs by a double wall (1—2), characterised in that this double wall (1—2) has two lines of orifices (5) which face one another and open out into the grooves (4) provided in the two lateral longitudinally-extending surfaces of the reinforcement member (3), the double wall/reinforcement member assembly being covered by the moulded-on capping (6), the sides of which are joined to the reinforcement member and to the double wall by the plastics material which passes through the orifices (5) in this double wall and fills the grooves (4) in this reinforcement member.

FIG.3

FIG.4

FIG.1

FIG.2